# FASCICULE DE BREVET EUROPEEN

(11) **EP 0 791 297 B1**
(45) Date de publication et mention de la délivrance du brevet: **20.11.2002**
(21) Numéro de dépôt: 97870026.8
(22) Date de dépôt: 21.02.1997
(51) Int. Cl.: A23G 1/00

(54) **Ganache de fruits**
Fruchtganache
Fruit ganache

(30) Priorité: 22.02.1996 EP 96870014
(43) Date de publication de la demande: 27.08.1997
(73) Titulaire: PURATOS N.V., 1702 Groot-Bijgaarden (BE)
(72) Inventeur: Dumoulin, Dimitri, 7863 Ghoy (BE); Soyeur, Jean-Luc René, 1430 Rebecq (BE)
(74) Mandataire: Van Malderen, Joelle

(56) Documents cités:
- EP-A- 0 294 119
- EP-A- 0 416 665
- EP-A- 0 427 544
- EP-A- 0 502 697
- WO-A-85/02757
- US-A- 4 818 554
- US-A- 4 923 708
- US-A- 5 364 653
- US-A- 5 460 847

## Description

### Objet de l'invention.

La présente invention concerne un nouveau produit alimentaire de décoration, de couverture et/ou de fourrage qualifié de ganache de fruits, son procédé d'obtention ainsi que les produits de pâtisserie, de biscuiterie et de chocolaterie comprenant ledit produit alimentaire.

### Arrière-plan technologique à la base de l'invention.

Une ganache au chocolat "classique" est, à la température ordinaire (20 °C), un produit pâteux sous forme d'une émulsion huile dans l'eau dont les sucres et les matières grasses sont cristallisés.

Les sucres sont ceux apportés par le chocolat, le lait et les sucres ajoutés en sursaturation. Les matières grasses sont les matières grasses apportées par le chocolat et celles éventuellement ajoutées pour obtenir une ganache.

Le chocolat noir qualifié de "fondant" en Belgique généralement utilisé pour préparer une ganache est composé des matières suivantes : masse de cacao, beurre de cacao, sucre, émulsifiant (lécithine).

Outre le chocolat, on retrouve également dans la composition d'une ganache : du sucre, de l'eau, des émulsifiants, du lait et éventuellement du sirop de glucose.

A une température de l'ordre de 35 à 40 °C, ces matières grasses se liquéfient et une partie des sucres se solubilise. La viscosité du produit à cette température reste importante et permet d'utiliser celui-ci pour couvrir et masquer des produits alimentaires, en particulier des pâtisseries. Pendant le refroidissement, le processus de recristallisation reprend et le produit durcit. En outre, sa surface devient légèrement brillante.

De plus, la ganache est un produit présentant des propriétés foisonnantes qui permettent également son utilisation en tant que fourrage, par exemple dans le fourrage des chocolats fourrés, qualifiés en Belgique de "pralines".

Une description d'un tel produit se retrouve de manière détaillée dans le document Confectionary Production (Nyffler E., Vol. 37(12), pp. 713-733 (1971)).

Afin de diversifier et d'améliorer les produits de boulangerie et de pâtisserie, il existe dans la profession des boulangers-pâtissiers, le souhait de pouvoir incorporer dans une ganache, du type ganache au chocolat (au chocolat blanc ou au chocolat noir) avec des fruits sous différentes formes (fruits frais broyés, purée de fruits, jus de fruits, ...). Ce produit aurait les propriétés physiques d'une ganache au chocolat et un goût fruité.

La combinaison d'une ganache au chocolat avec des fruits entraîne une incompatibilité, à savoir celle du goût chocolat (neutre) avec un goût de fruit acide.

L'invention vise à résoudre ce problème et en particulier à pondérer les propriétés fonctionnelles de chacun des composants d'une ganache aux fruits de manière à assurer leur compatibilité.

### Etat de la technique.

Le document EP 0 440 203 A1 au nom de Lotte CO. Ltd. décrit des mélanges d'huile, de sucre, de fruits, de lait et d'émulsifiants. Ledit produit ne correspond pas à la définition d'une ganache avec des fruits.

Le document WO 85/02757-A décrit des produits qui sont une combinaison de chocolat et de fruits.

Le document EP 0 294 119 A présente une crème artificielle qui est une dispersion de type huile dans l'eau contenant une quantité élevée d'eau (40-70 %).

Le document EP 0 427 544 A décrit une méthode de fabrication d'un chocolat qui contient une certaine quantité d'eau.

Le document US 5 460 847 décrit une ganache au chocolat "traditionnelle" et une méthode pour sa fabrication. Il s'agit d'une émulsion de type huile dans l'eau.

Le document US 5 364 653 décrit un produit de confiserie de goût fruité. Ce produit est moulé pour la consommation à l'état d'un produit solide (candybar).

### Buts de l'invention.

La présente invention vise à obtenir un nouveau produit alimentaire de décoration, de couverture et/ou de fourrage que l'on peut définir comme une ganache de fruits, dont les composants sont adaptés de manière à être compatibles entre eux, tout en présentant des caractéristiques similaires et/ou améliorées par rapport à celles d'une ganache au chocolat "classique", à savoir une composition :
- qui est pâteuse à semi-solide dans son emballage, mais permet un travail à la spatule,
- qui refond à une température de 35 à 40 °C,
- qui présente une viscosité permettant la couverture de pâtisseries,
- qui se fige rapidement et permet la manipulation rapide desdites pâtisseries,
- qui permet une découpe nette desdites pâtisseries,
- qui donne une brillance au produit fini,
- qui a des propriétés foisonnantes permettant une utilisation en tant que fourrage, par exemple dans le fourrage des "pralines" (chocolats fourrés),
- qui est stable à la congélation et à la décongélation, et/ou
- qui est peu sensible à l'oxydation.

En outre, la présente invention vise également à obtenir un procédé d'obtention de ladite ganache de fruits.

En particulier, la présente invention vise à obtenir un procédé d'obtention dont la mise en oeuvre est simple et rapide.

### Eléments caractéristiques de la présente invention.

Les Inventeurs ont cherché à obtenir un nouveau produit alimentaire que l'on peut qualifier d'une "ganache de fruits" dont certains composants sont adaptés de manière à les rendre compatibles entre eux.

On entend par "ganache de fruits" une composition alimentaire pour la décoration, la couverture et/ou le fourrage de compositions alimentaires dans le domaine de la pâtisserie, de la biscuiterie et/ou de la chocolaterie, avec des fruits, dont les caractéristiques physiques, fonctionnelles et organoleptiques (texture, structure, ...) correspondent aux caractéristiques d'une ganache au chocolat "classique".

Par conséquent, dans ladite "ganache de fruits", on a cherché à substituer certains des ingrédients caractéristiques du chocolat (présent dans une ganache au chocolat "classique") tout en conservant les propriétés fonctionnelles et organoleptiques conférées par le chocolat dans une ganache.

La présente invention concerne un nouveau produit alimentaire de décoration, de couverture et/ou de fourrage dit "ganache de fruits", qui a les propriétés physiques et fonctionnelles d'une ganache et qui comprend des fruits, des extraits de fruits (purées ou jus de fruits) ou des substituts de fruits et une matière grasse qui est un substitut de beurre de cacao (sous forme d'une graisse solide à 25 °C), ainsi que les ingrédients habituels d'une ganache (à savoir du sucre (ou un substitut de sucre), de l'eau, un ou plusieurs émulsifiants, du lait ou un produit reconstitué à base de poudre de lait et éventuellement des additifs tels que des sirops de sucrose, des colorants et/ou des arômes), sous forme d'une émulsion eau dans huile.

La teneur en eau de ce produit alimentaire est de préférence inférieure à 20 % en poids, de préférence entre 10% et 20% en poids.

Dans ledit produit alimentaire, le substitut de beurre de cacao, dénommé également Cocoa Butter Substitute (CBS) est utilisé pour le remplacement total ou partiel du beurre de cacao.

Avantageusement, ledit substitut de beurre de cacao est de l'huile de palmiste, de préférence fractionnée, hydrogénée, blanchie, raffinée et désodorisée (HPKO).

Ce substitut de beurre de cacao permet d'obtenir un produit alimentaire (ganache de fruits) présentant les propriétés avantageuses suivantes :
- le temps de cristallisation est court,
- il ne nécessite pas d'opération de tempérage,
- le produit présente un maintien de la brillance prolongé dans le temps,
- le produit présente un faible taux d'acides gras polyinsaturés qui permet une meilleure résistance du produit à l'oxydation,
- le produit présente un point de fusion voisin de 30 à 35 °C.

Selon une autre forme d'exécution préférée de l'invention, ledit substitut de beurre de cacao est de l'huile de coco.

De préférence, ladite matière grasse est caractérisée également par un "Solid Fat Content (SFC)" déterminé par résonance magnétique nucléaire (RMN) selon la méthode IUPAC 2.150a et tel que défini dans le tableau I ci-après :

**Tableau I.**

| **Température (°C)** | **SFC** | **Variation** |
|---|---|---|
| 20 | 90 | ± 10 |
| 25 | 86 | ± 8 |
| 30 | 43 | ± 5 |
| 35 | 3 | ± 5 |
| 40 | 0 | ± 1 |

De préférence, la matière grasse utilisée dans ladite ganache présente de manière avantageuse un indice d'iode plus bas que 20 tel que déterminé par la méthode AOAC (Official Method of Analysis, 15^{ème} édition, Vol. 2, p. 956 (1990)).

Avantageusement, ledit produit alimentaire selon l'invention comprend également un régulateur d'acidité (régulateur du pH de la composition obtenue) constitué de préférence par de l'acide citrique. En outre, celui-ci apporte une sensation organoleptique de "fraîcheur" nécessaire dans une composition de fruits.

De plus, pour adoucir ledit produit alimentaire (pour des besoins culturo-alimentaires spécifiques), celui-ci peut également comprendre de l'acide tartrique.

Ledit produit alimentaire comprend également des fruits, apportés par exemple sous forme de purées ou de jus concentrés ayant des extraits secs variant de préférence suivant le type de fruit entre 30 et 65% . Par exemple, dans le cas d'une ganache au citron, ce pourcentage est de 45%.

Parmi les ingrédients habituels pour ledit produit alimentaire, le sucre est de préférence un sucre cristallisé de granulométrie fine à moyenne, semblable à celui utilisé pour la préparation d'une ganache au chocolat "classique".

Dans ledit produit alimentaire, le lait est de préférence un lait écrémé condensé et sucré ayant un extrait sec de 72%. Cependant, une autre source de lait ayant un autre extrait sec peut être utilisée (lait non écrémé condensé, produit reconstitué à base de poudres de lait, ...), moyennant une rééquilibration des différents ingrédients de la composition de la ganache de fruits.

La composition dudit produit alimentaire comprend également des émulsifiants. Le lait, de part ses composants protéiques, a de bonnes propriétés émulsifiantes; mais vu l'apport en matière grasse de la ganache de fruits selon l'invention, un émulsifiant a été ajouté pour stabiliser l'émulsion et influencer sa viscosité. Les émulsifiants les plus aptes sont la lécithine, le Tween, les mono- et diglycérides et les esters lactique d'acides gras.

De préférence, dans la composition dudit produit alimentaire selon l'invention, le rapport optimal matières grasses / lait est voisin de 2. Le but est d'obtenir un produit alimentaire (ganache de fruits) qui présente des propriétés comparables à celles d'une ganache au chocolat "classique". En effet, le chocolat apporte beaucoup de viscosité lors de l'utilisation, ce qui permet au pâtissier de couvrir les pâtisseries d'une couche de chocolat de 1 à 3 mm.

En adaptant les différents paramètres des composants du produit alimentaire selon l'invention, il est possible d'obtenir un produit stable qui possède des qualités comparables à celles d'une ganache au chocolat "classique".
Si le rapport matières grasses / lait excède 2, il existe un risque d'instabilité du produit, une perte d'opacité, une perte de viscosité ou une solidification trop importante du produit dans son emballage. Cependant, en augmentant la teneur en lait dans la composition, on peut induire une cristallisation plus lente et obtenir un produit qui ne sèche plus en surface.

Il est à noter que les caractéristiques de stabilité dudit produit induisent également ses propriétés foisonnantes, qui permettent son utilisation en tant que fourrage, en particulier dans le fourrage des "pralines".

En outre, il est à noter que le produit alimentaire selon l'invention ne présente pas ou peu de phénomène d'inversion du saccharose, qui en milieu acide serait susceptible d'induire des phénomènes biochimiques d'anticristallisation qui nuiraient à la mise en oeuvre et aux propriétés avantageuses dudit produit alimentaire selon l'invention.

La présente invention concerne également le procédé d'obtention dudit produit alimentaire, comprenant les étapes suivantes :
- du sucre est dissous dans de l'eau;
- la solution obtenue est ensuite tempérée à une température comprise entre 55 et 60 °C;
- une matière grasse qui est un substitut de beurre de cacao tel que décrit ci-dessus est fondue avec un ou plusieurs émulsifiants et tempérée à une température de l'ordre de 60 °C;
- la matière grasse est ensuite transférée à la solution de sucre sous agitation lente de manière à former une émulsion;
- on ajoute ensuite le lait tempéré à l'émulsion à une température comprise entre 25 et 20 °C;
- la composition est ensuite maintenue sous agitation lente jusqu'à obtention d'une pâte homogène;
- le fruit, apporté par exemple sous forme de purée ou de jus de fruits concentré, ainsi qu'un régulateur d'acidité et éventuellement un arôme et/ou colorant naturel sont additionnés à la pâte obtenue pour former la composition du produit alimentaire selon l'invention.

Avantageusement, ledit procédé comporte également une étape d'évaporation du solvant aqueux de la solution de sucre, de manière à réduire la teneur en extrait sec de l'émulsion.

Un dernier aspect de la présente invention concerne des compositions alimentaires, notamment des produits de pâtisserie, de biscuiterie et/ou de chocolaterie, par exemple des chocolats fourrés (pralines), comprenant le produit alimentaire selon l'invention.

### Description d'une forme d'exécution préférée de l'invention.

### 1. Ingrédients

| | Proportion |
|---|---|
| Sucre: | 30 - 40% |
| Matière grasse: | 20 - 30 % |
| Lait: | 10 - 20 % |
| Fruit (jus concentré de citron): | 10 - 20 % |
| Eau: | 5 - 15 % |
| Emulsifiant: 0.5 - 1.0 % | |
| Régulateur d'acidité: | 0.5 - 1.0 % |
| Arôme/colorant naturel: | 0.1 - 0.5 % |

### 2. Procédé d'obtention

Le sucre est dissous dans l'eau en passant éventuellement par une étape d'évaporation pour obtenir la teneur en extrait sec voulue; la solution est tempérée à 55-60 °C (système A).

La matière grasse (substitut de beurre de cacao) est fondue avec les émulsifiants et tempérée à 60 °C (système B).

La matière grasse du système B est transférée dans la solution de sucre du système A sous agitation lente.

Lorsque l'émulsion est formée, on ajoute le lait tempéré à 25-30 °C.

Le système est maintenu sous agitation lente jusqu'à l'obtention d'une pâte homogène.

En fin de processus, le jus de citron, le régulateur d'acidité et les composants aromatique ou de coloration sont ajoutés.

Dans ledit procédé, certains paramètres sont optimalisés par rapport au procédé d'obtention d'une ganache au chocolat "classique".

En effet, la viscosité de la ganache à 30-35 °C lors de la refonte de la composition selon l'invention par l'utilisateur est primordiale. Cette propriété fonctionnelle existant dans une ganache au chocolat "classique" est obtenue par la présence du chocolat qui apporte beaucoup de viscosité lors de l'utilisation, ce qui permet par exemple au pâtissier de couvrir les pâtisseries d'une couche de chocolat de 2 à 3 mm.

Dans le produit alimentaire (ganache de fruits) selon l'invention, il est possible d'obtenir la même viscosité à chaud, en diminuant la teneur en eau libre ajoutée, au besoin en passant par une étape d'évaporation de la solution de sucre.

Il est également possible d'obtenir ce résultat en augmentant la phase de matière grasse. Cependant, un excès de matière grasse peut induire une instabilité de l'émulsion, une perte d'opacité, une perte de viscosité ou une solidification trop importante du produit dans son emballage.

Il est également possible d'augmenter la teneur en lait en sachant qu'un excès peut cependant induire une cristallisation plus lente et un produit qui ne sèche plus en surface.

De plus, il est également possible de modifier le ratio des différents émulsifiants.

Pour obtenir la prise rapide du produit après application, il est important d'optimaliser la teneur totale en matière grasse et en sucre, en particulier la teneur en lait.

De manière à éviter les propriétés d'inversion du saccharose (phénomène d'anticristallisation se produisant en milieu acide), les fruits et le régulateur d'acidité (acide citrique) sont additionnés à la composition en fin de procédé de production.

En outre, par un contrôle rigoureux des températures dans le procédé de préparation de la ganache de fruits selon l'invention, la brillance de la ganache de fruits couvrant les pâtisseries est assurée.

Ce type de ganache aux fruits peut servir pour la préparation de pâtisseries du type : Eclair, Javanais, couverture, Bavarois, Sacher Torte, biscuit au citron, etc.

## Revendications

1. Produit alimentaire de décoration, de couverture et/ou de fourrage qui a les propriétés physiques et fonctionnelles d'une ganache, et qui comprend des fruits, des extraits de fruits (purées ou jus de fruits) ou des substituts de fruits et une matière grasse qui est un substitut de beurre de cacao constitué d'huile de palmiste ou d'huile de coco, sous forme d'une graisse solide à 25 °C, ainsi que les ingrédients habituels d'une ganache, à savoir du sucre ou un substitut de sucre, de l'eau, un ou plusieurs émulsifiants, du lait ou un produit reconstitué à base de poudre de lait et éventuellement des additifs, sous forme d'une émulsion eau dans huile.

2. Produit alimentaire selon la revendication 1, **caractérisé en ce que** sa teneur en eau est inférieure à 20 % en poids, de préférence entre 10% et 20% en poids.

3. Produit alimentaire selon la revendication 1 ou 2, **caractérisé en ce que** le substitut de beurre de cacao est de l'huile de palmiste, fractionnée, hydrogénée, blanchie, raffinée et désodorisée (HPKO).

4. Produit alimentaire selon l'une quelconque des revendications précédentes, **caractérisé en ce que** le substitut de beurre de cacao comprend un "Solid Fat Content (SFC)" déterminé par résonance magnétique nucléaire selon la méthode IUPAC 2.150A et tel que défini dans le tableau 1.

5. Produit alimentaire selon l'une quelconque des revendications précédentes, **caractérisé en ce que** le substitut de beurre de cacao présente de manière avantageuse un indice d'iode inférieur à 20 tel que défini par la méthode AOAC.

6. Produit alimentaire selon l'une quelconque des revendications précédentes, **caractérisé en ce qu'**il comprend un régulateur d'acidité, de préférence de l'acide citrique.

7. Produit alimentaire selon l'une quelconque des revendications précédentes, **caractérisé en ce qu'**il comprend de l'acide tartrique.

8. Produit alimentaire selon l'une quelconque des revendications précédentes, **caractérisé en ce que** le rapport matières grasses / lait est de l'ordre de 2.

9. Procédé d'obtention du produit alimentaire selon l'une quelconque des revendications précédentes, **caractérisé en ce qu'**il comprend les étapes suivantes :
- du sucre est dissous dans l'eau,
- la solution obtenue est ensuite tempérée à une température comprise entre 55 et 60 °C,
- une matière grasse qui est un substitut de beurre de cacao est fondue avec un ou plusieurs émulsifiants et tempérée à une température de l'ordre de 60 °C,
- la matière grasse est ensuite transférée à la solution de sucre sous agitation lente de manière à former une émulsion,
- on ajoute le lait tempéré à l'émulsion à une température comprise entre 20 et 25 °C,
- on maintient ensuite la composition sous agitation lente jusqu'à l'obtention d'une pâte homogène,
- le ou les fruits apportés sous forme de purée ou de jus de fruits concentré ainsi qu'un régulateur d'acidité et éventuellement un arôme et/ou un colorant naturel sont additionnés à la pâte obtenue pour former ledit produit alimentaire.

10. Procédé selon la revendication 9, **caractérisé en ce qu'**il comporte une étape d'évaporation du solvant aqueux de la solution de sucre préalablement à l'addition de la matière grasse.

11. Produit de pâtisserie, de biscuiterie et/ou de chocolaterie, comprenant le produit alimentaire selon l'une quelconque des revendications 1 à 8 et de préférence choisi parmi le groupe constitué pour les chocolats fourrés, les Eclairs, les Javanais, les produits de couverture, les Bavarois, les Sacher Torte ou les biscuits au citron.

## Patentansprüche

1. Lebensmittelprodukt zum Verzieren, Bedecken und/oder Ausstopfen, das die physischen und funktionellen Eigenschaften einer Ganasche besitzt und das Früchte, Fruchtextrakte (Pürees oder Fruchtsäfte) oder Fruchtersatzmittel, sowie eine Fettmasse, die ein Ersatzmittel für eine Kakaobutter aus Palmkernöl oder Kokosnussöl in der Form eines bei 25°C festen Fetts darstellt, und die herkömmlichen Zutaten einer Ganasche aufweist, nämlich Zucker oder ein Zuckerersatzmittel, Wasser, ein oder mehrere Emulgatoren, Milch oder ein rückgebildetes Produkt aus Milchpulver und möglicherweise Zusatzstoffe in der Form einer Wasseremulsion in Öl.

2. Lebensmittelprodukt gemäß Anspruch 1, **dadurch gekennzeichnet, daß** sein Wassergehalt unter 20 Gewichts-% liegt, vorzugsweise zwischen 10 % und 20 Gewichts-%.

3. Lebensmittelprodukt gemäß Anspruch 1 oder 2, **dadurch gekennzeichnet, dass** das Ersatzmittel für Kakaobutter aus zerkleinertem, hydriertem, gebleichtem, raffiniertem und geruchlosem Palmkernöl (HPKO) besteht.

4. Lebensmittelprodukt gemäß irgendeinem der vorhergehenden Ansprüche, **dadurch gekennzeichnet, dass** das Ersatzmittel für Kakaobutter einen "Festfettgehalt (SFC = Solid Fat Content)" aufweist, der durch magnetische Kernresonanz gemäß der IUPAC 2.150A Methode bestimmt wird und wie in der Tafel 1 festgelegt ist.

5. Lebensmittelprodukt gemäß irgendeinem der vorhergehenden Ansprüche, **dadurch gekennzeichnet, dass** das Ersatzmittel für Kakaobutter vorteilhaft einen unter 20 liegenden Iodindex aufweist, so wie derselbe durch die AOAC Methode bestimmt wird.

6. Lebensmittelprodukt gemäß irgendeinem der vorhergehenden Ansprüche, **dadurch gekennzeichnet, dass** es einen Säureregler enthält, vorzugsweise Zitronensäure.

7. Lebensmittelprodukt gemäß irgendeinem der vorhergehenden Ansprüche, **dadurch gekennzeichnet, dass** es Weinsäure enthält.

8. Lebensmittelprodukt gemäß irgendeinem der vorhergehenden Ansprüche, **dadurch gekennzeichnet, dass** das Verhältnis Fettmassen/Milch in der Größenordnung von 2 liegt.

9. Verfahren zum Erhalten des Lebensmittelprodukts gemäss irgendeinem der vorhergehenden Ansprüche, **dadurch gekennzeichnet, dass** es die folgenden Schritte aufweist:
- Zucker wird in Wasser aufgelöst,
- die erhaltene Lösung wird danach bei einer Temperatur zwischen 55 und 60°C temperiert,
- ein Fett, das ein Ersatzmittel für Kakaobutter ist, wird mit einem oder mit mehreren Emulgatoren geschmolzen und bei einer Temperatur in der Größenordnung von 60°C temperiert,
- das Fett wird danach der Zuckerlösung unter langsamer Bewegung zugeführt, so dass eine Emulsion gebildet wird,
- die temperierte Milch wird zu der Emulsion bei einer Temperatur zwischen 20 und 25°C hinzugefügt,
- danach wird die Zusammensetzung unter langsamer Bewegung bis zum Erzielen einer homogenen Paste gehalten,
- die Frucht oder die Früchte, die in der Form von Püree oder von konzentrierten Fruchtsäften zugeführt worden sind, sowie ein Säureregler und möglicherweise ein Geschmackstoff und/oder ein natürlicher Farbstoff werden zu der erzielten Paste hinzugefügt, um das besagte Lebensmittelprodukt herzustellen.

10. Verfahren gemäß Anspruch 9, **dadurch gekennzeichnet, dass** es, vor dem Hinzufügen der Fettmasse, einen Verdampfungsschritt des wässerigen Lösungsmittels aus der Zuckerlösung heraus aufweist.

11. Produkt der Konditorei, Biskuit- und/oder Schokoladenherstellung, welches das Lebensmittelprodukt gemäss irgendeinem der Ansprüche 1 bis 8 enthält, und vorzugsweise aus der Gruppe bestehend aus gefüllten Schokoladen, Eclairs, Javanais, Bedeckungsprodukten, Bayrischer Creme, Sachertorten oder Zitronenbiskuits ausgewählt wird.

## Claims

1. A decorative, covering and/or filling food product having the physical and functional properties of a ganache and which comprises fruit, fruit extracts (mashed fruit or fruit juice) or fruit substitutes and a fat substance which is a cocoa butter substitute consisting of palm kernel oil or coconut oil, in the form of solid fat at 25°C, as well as the usual ingredients of a ganache, i.e. sugar or a sugar substitute, water, one or more emulsifiers, milk or a product regenerated from milk powder and optionally, additives, in the form of a water-in-oil emulsion.

2. A food product according to claim 1, **characterized in that** the water content thereof is lower than 20% by weight, preferably between 10% and 20% by weight.

3. A food product according to claim 1 or 2, **characterized in that** the cocoa butter substitute is fractioned, hydrogenated, blanched, refined and deodorized palm kernel oil (HPKO).

4. A food product according to any one of the preceding claims, **characterized in that** the cocoa butter substitute comprises a "Solid Fat Content (SFC)" being determined through nuclear magnetic resonance according to IUPAC 2.150A method and as defined in table 1.

5. A food product according to any one of the preceding claims, **characterized in that** the cocoa butter substitute advantageously shows an iodine index lower than 20, as defined by the AOAC method.

6. A food product according to any one of the preceding claims, **characterized in that** it comprises an acidity regulator, preferably citric acid.

7. A food product according to any one of the preceding claims, **characterized in that** it comprises tartaric acid.

8. A food product according to any one of the preceding claims, **characterized in that** the fat substances/milk ratio is about 2.

9. A method for obtaining the food product according to any one of the preceding claims, **characterized in that** it comprises the following steps:
■ sugar is dissolved in water,
■ the resulting solution is then tempered at a temperature between 55 and 60°C,
■ a fat substance which is a cocoa butter substitute is melt with one or more emulsifiers and tempered at a temperature of about 60°C,
■ the fat substance is then transferred to the sugar solution under slow stirring so as to form an emulsion,
■ the tempered milk is added to the emulsion at a temperature between 20 to 25°C,
■ the composition is then maintained under slow stirring until a homogeneous paste is obtained,
■ the piece(s) of fruit supplied in the form of mashed fruit or concentrated fruit juice as well as an acidity regulator and optionally a natural flavouring agent and/or a colouring agent is (are) added to the resulting paste in order to form said food product.

10. A method according to claim 9, **characterized in that** it comprises an evaporation step of the aqueous solvent in the sugar solution before the fat substance addition.

11. A pastry, biscuit and/or chocolate product, comprising the food product according to any one of claims 1 to 8 and preferably selected from the group consisting of filled chocolates, éclairs, Javanais, covering products, Bavarois, Sacher Torte or lemon biscuits.
